# EUROPÄISCHE PATENTSCHRIFT

(11) **EP 0 779 785 B1**
(45) Veröffentlichungstag und Bekanntmachung des Hinweises auf die Patenterteilung: **20.05.1998**
(21) Anmeldenummer: 95929646.8
(22) Anmeldetag: 05.09.1995
(51) Int. Cl.: A43B 9/00, A43B 13/28, B29D 31/50

(54) **SPORTSCHUH UND VERFAHREN ZU SEINER HERSTELLUNG**
SPORTS SHOE AND PROCESS FOR MOULDING THE SAME
CHAUSSURE DE SPORT ET PROCEDE DE DE MOULAGE DE CELLE-CI

(30) Priorität: 05.09.1994 AT 1697/94
(43) Veröffentlichungstag der Anmeldung: 25.06.1997
(73) Patentinhaber: MRK HANDELS AG, 8039 Zürich (CH)
(72) Erfinder: KUBELKA, Axel, A-8742 Obdach (AT)
(74) Vertreter: Matschnig, Franz, Dipl.-Ing.
(86) Internationale Anmeldenummer: AT9500178
(87) Internationale Veröffentlichungsnummer: WO9607340

(56) Entgegenhaltungen:
- WO-A-94/14350
- DE-A- 2 523 299
- DE-A- 3 001 380
- FR-A- 2 211 844
- FR-A- 2 615 366
- US-A- 3 429 007
- US-A- 3 530 522
- US-A- 4 420 894
- US-A- 5 357 695
- DATABASE WPI Section PQ, Week 8004 Derwent Publications Ltd., London, GB; Class P22, AN 80-A8135C & NL,A,7 807 177 (REINGOUD) , 3.Januar 1980

## Beschreibung

Die vorliegende Erfindung bezieht sich auf einen Sportschuh, mit einer Sohle und einem Schuhoberteil, der über ein Verbindungsmittel mit der Sohle verbunden ist. Weiters bezieht sich die vorliegende Erfindung aufein Verfahren zur Herstellung eines solchen Schuhes.

Ein Schuh der oben genannten Art ist beispielsweise aus der NL 7 807 177 oder der FR 2 615 366 bekannt geworden. Bei diesen bekannten Schuhen ist jeweils ein einteiliger Schuhoberteil vorgesehen, der im Bereich der Sohle ein umlaufendes Profil aufweist, welches mit einem umlaufenden Gegenprofil des Sohlenkörpers zu einer Einheit verbindbar ist. Zur Verbesserung dieser Verbindung sind im Bereich dieser Profile Verbindungsmittel in Form von Stiften oder Schrauben vorgesehen. Bei dem aus der EP-451 120 bekannt gewordenen Schuh ist ebenso ein Schuhoberteil über ein umlaufendes Profil mit einem Sohlenkörper verbunden, wobei das Verbindungsmittel als eine umlaufende Naht ausgebildet ist. Andere Verbindungsmittel zum Verbinden von Sohlenkörpern mit Schuhoberteilen, wie z.B. Rastnasen, Druckknöpfe, Ösen und Riegel gehen unter anderem aus der US-4 420 894, der DE-2 523 299 und der US-4 887 369 hervor. jedoch ist bei diesen Dokumenten die Verwendung eines Profiles bzw. eines Gegenprofiles nicht vorgesehen. Schuhe bei welchen die Verwendung eines Profiles und eines Gegenprofiles zwar vorgesehen ist, jedoch keine Verbindungsmittel der genannten Art verwendet werden, gehen unter anderem aus der EP-451 120 und der US-5 065 531 hervor.

Im Sinne einer wirtschaftlichen Herstellung sind insbesondere Sportschuhe der genannten Art darauf ausgerichtet, mit möglichst wenig Teilen hergestellt zu werden. Bei Ski- oder anderen Schalenschuhen wird im allgemeinen eine einstückige Bauart bevorzugt. Diese Bauart verursacht insbesondere dann, wenn spezielle Einbauten vorgesehen sind, Probleme bei dem Entformen und bei der Weiterverarbeitung, welche sodann im allgemeinen nicht vollautomatisch ablaufen kann und daher zeitaufwendig ist. Weiters ist es bei einer einstückigen Bauweise nicht oder nur schwer möglich, elastische und unelastischen Teile, z.B. eine steife Sohle und einen elastischen Oberteil, miteinander zu kombinieren.

Eine Aufgabe der Erfindung liegt daher darin, einen Sportschuh zu schaffen, bei welchem der Schuhoberteil und die Sohle über ein entsprechendes Profil und ein Verbindungsmittel der eingangs genannten Art rasch und nach Möglichkeit vollautomatisch miteinander verbindbar sind. Weiters sollte insbesondere für Anwendungen im Sportbereich eine feste und dauerhafte Verbindung zwischen der Sohle und dem Schuhoberteil herrschen. Die für einen solchen Schuh erforderlichen Teile sollten einfach zwischengelagert oder transportiert werden können. Weiters ist im Rahmen der vorliegenden Erfindung vorgesehen, Anbauteile zur Verwendung des Schuhes als Sportschuh, z.B. einem Roll- oder Eislaufschuh, nach Möglichkeit zusammen mit den Teilen des Schuhes, das heißt, einstückig mit der Sohle oder dem Schuhoberteil herzustellen oder bei der Herstellung in diese Teile zu integrieren.

Diese Aufgaben werden in vorteilhafter Weise durch einen Sportschuh gelöst bei welchem der Schuhoberteil zwei Teilabschnitte aufweist, welche entlang einer in Längsrichtung verlaufenden Mittelebene miteinander verbunden sind, wobei diese Teilabschnitte über ein Verbindungsmittel mit der Sohle verbunden sind, welche an ihrer Berandung zumindest abschnittsweise ein Profil aufweist, welches einem Gegenprofil des Schuhoberteils zugeordnet ist, und das Profil und das Gegenprofil mittels einer Mehrzahl von in Abstand voneinander angeordneten Elementen des Verbindungsmittels, wie z.B. Rastnasen, Haken, Nieten, Stiften, Schrauben, verschweißbaren Zapfen od. dgl., formschlüssig miteinander verbunden sind. Diese Maßnahme gewährleistet eine vollautomatische Fertigung eines Schuhes, da die zwei Teilabschnitte des Schuhoberteils problemlos hergestellt werden können, auch wenn komplizierte Einbauten oder Anbauten vorgesehen sind. Das Profil kann mühelos mit dem Gegenprofil verbunden werden, selbst wenn, wie dies bei Sportschuhen üblich ist, unterschiedlich steife Materialien verwendet werden.

Ein erfindungsgemäßes Verfahren zur Herstellung eines solchen Schuhes weist in Vorteilhafter Weise die folgenden Schritte auf, nämlich Herstellen der zwei Teilabschnitte des Schuhoberteils aus einem Kunststoff durch Spritzen in je einer Form, Herstellen einer Sohle, vorzugsweise einstückig, durch Spritzen aus einem Kunststoff, gegebenenfalls unter Einbeziehung eines Anbauteiles für einen Roll- oder Eislaufschuh, Zusammenfügen der zwei Teilabschnitte des Schuhoberteils und der Sohle in einem einzigen Arbeitsgang zu einem Sportschuh der oben genannten Art.

Die zwei Teilabschnitte des Schuhoberteils sind bei einer bevorzugten Ausführungsvariante eines solchen Schuhes über eine im Schuhspitzen- oder Fersenbereich angeordnete Lasche miteinander verbunden, die vorzugsweise einstückig mit den zwei Teilabschnitten des Schuhoberteils ausgebildet ist. Obwohl dieser Schuh nun aus drei Teilen aufgebaut ist, kann dieser dennoch rasch gefertigt und vollautomatisch zusammengebaut werden. Dies ist unter anderem deshalb möglich, da verschiedene Ein- und Anbaustücke bereits bei der Fertigung in den Schuh integriert oder einstückig mit diesem Schuh hergestellt werden können. Ein weiterer Vorteil einer dreiteiligen Fertigung ist darin zu sehen, daß die Teile ineinander geschachtelt und daher einfach und platzsparend zwischengelagert oder transportiert werden können.

Weitere Vorteile und Merkmale der Erfindung ergeben sich aus weiteren Unteransprüchen und der folgenden Beschreibung mehrerer Ausführungsförmen eines erfindungsgemäßen Schuhes. Dabei wird auf die beiliegenden Figuren Bezug genommen, die zeigen:
Figur 1 einen Schuh der erfindungsgemäßen Art am Beispiel eines einspurigen Rollschuhes in einer schematischen Seitenansicht und Figur 1a einen Teilausschnitt dieses Schuhes in einer schematischen Draufsicht,
Figuren 2a bis h je einen Querschnitt durch acht verschiedene Ausführungsformen eines erfindungsgemäßen Schuhes,
Figuren 3a bis d je einen Querschnitt durch fünf weitere Ausführungsformen eines erfindungsgemäßen Schuhes,
Figuren 4a bis c drei weitere Querschnitte durch Ausführungsformen erfindungsgemäßer Schuhe,
Figuren 5a bis f eine weitere Ausführungsform eines erfindungsgemäßen Schuhes in einer Seitenansicht (Fig. 5c), sein Formenblock in einer Seitenansicht (Fig. 5a) und einer Draufsicht (Fig. 5b) und drei Teilausschnitte in einem Querschnitt (Fig. 5d bis f),
Figuren 6a und 6b einen Rollschuh der erfindungsgemäßen Art in einer schematischen Seitenansicht (Fig. 6a) und einem Querschnitt (Fig. 6b),
Figuren 7a und 7b ein Skischuh der erfindungsgemäßen Art in einer perspektivischen Darstellung (Fig. 7a) und einer schematischen Draufsicht (Fig. 7b),
Figuren 8a, 8b und 8c einen einspurigen Rollschuh der erfindungsgemäßen Art, der mit einer Breitenverstellung ausgestattet ist, in einer schematischen Seitenansicht (Fig. 8a), einer schematischen Ansicht von hinten (Fig. 8b) und einer schematischen Draufsicht (Fig. 8c).

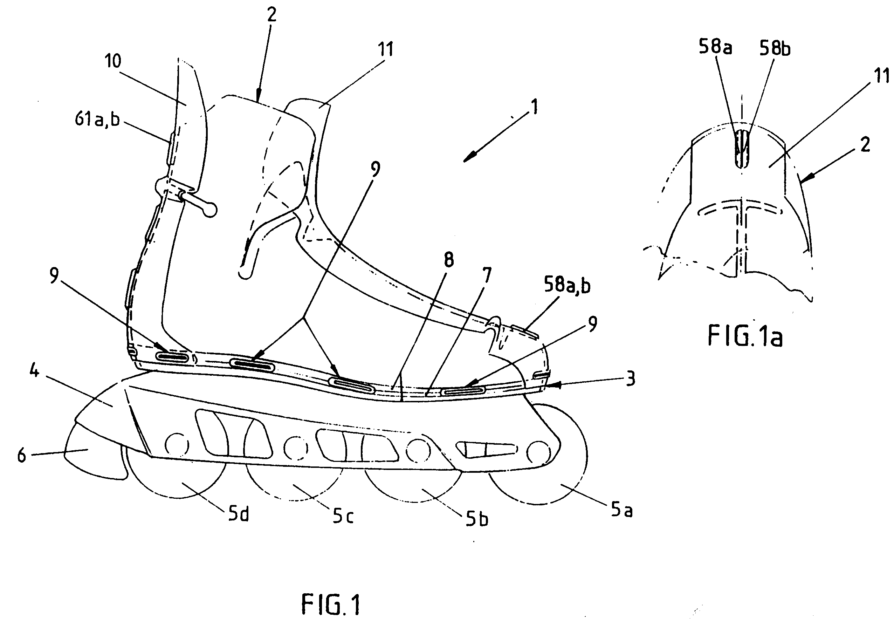

Vorerst wird auf die Figur 1 Bezug genommen in welcher ein Schuh 1 der erfindungsgemäßen Art dargestellt ist. Bei diesem Schuh handelt es sich beispielsweise um einen einspurigen Rollschuh 1 mit einem Schuhoberteil 2 und einer Sohle 3, die bei dem vorliegenden Ausführungsbeispiel einstückig mit einem Rahmen 4 ausgebildet ist, in welchem hintereinander vier Laufrollen 5a, 5b, 5c und ein Stopper 6 angeordnet sind.

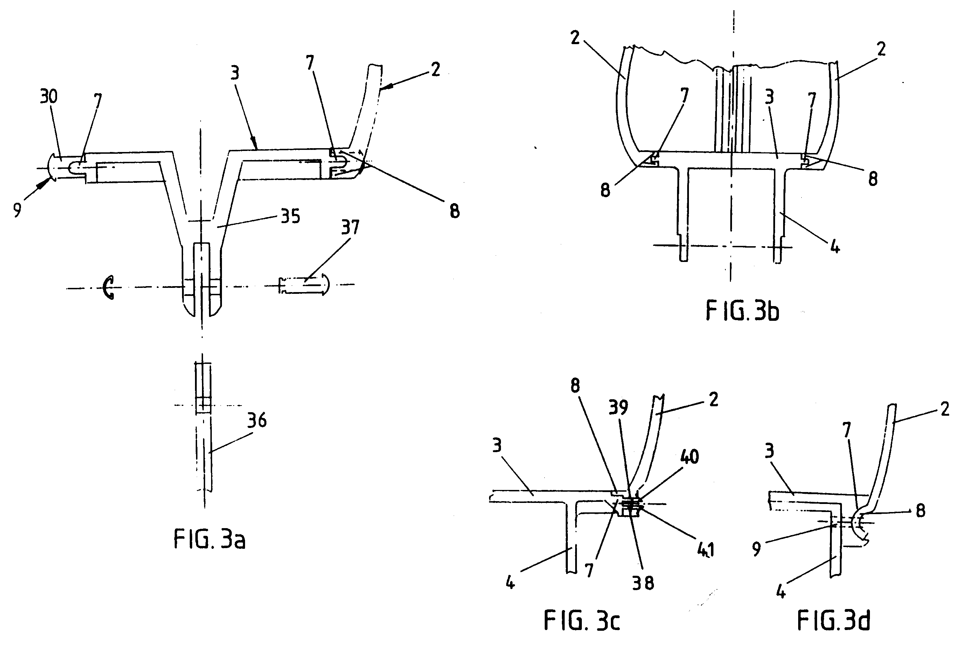

Die Sohle 3 weist an ihrer Berandung ein seitlich umlaufendes Profil 7 auf, welches einem Gegenprofil 8 des Schuhoberteils 2 zugeordnet und über ein Verbindungsmittel mit diesem formschlüssig verbunden ist Diese Verbindung des Profils 7 mit dem Gegenprofil 8 wird mittels einer Mehrzahl von in Abstand voneinander angeordneten Elementen 9 des Verbindungsmittels hergestellt, wobei jedes dieser Elemente 9 bei dem vorliegenden Ausführungsbeispiel als eine selbsthaltende Steckverbindung ausgebildet ist, die einen von der Sohle 3 seitlich abstehenden, geschlitzten Zapfen aufweist, der durch eine entsprechende seitliche Öffnung des Schuhoberteils 2 nach außen geführt und dort über eine Rastnase an der Berandung dieser Öffnung eingeschnappt ist. Die genaue Ausgestaltung dieser Steckverbindung wird weiter unten z.B. mit Bezug auf die Figur 3c naher erläutert.

Im Fersen- und hinteren Schaftabschnitt des Rollschuhes 1 ist eine von der Sohle 3 nach oben bis über den Schaftrand geführte Heckstütze 10 vorgesehen, die ebenso über selbsthaltende Steckverbindungen der oben genannten Art an dem Schuhoberteil 2 bzw. Sohle 3 des Rollschuhes befestigt sind.

Weiters ist bei diesem Rollschuh 1 eine über den Rist- und den vorderen Schaftbereich geführte, den Schuhoberteil 2 in diesem Bereich überlappende Zunge 11 vorgesehen, die mit ihrem vorderen Endabschnitt ebenso über Steckverbindungen der genannten Art an dem Schuhoberteil 2 bzw. der Sohle 3 befestigt ist. Die Befestigung der Zunge 11 an dem Rollschuh 1 ist in Figur 1a im Detail dargestellt.

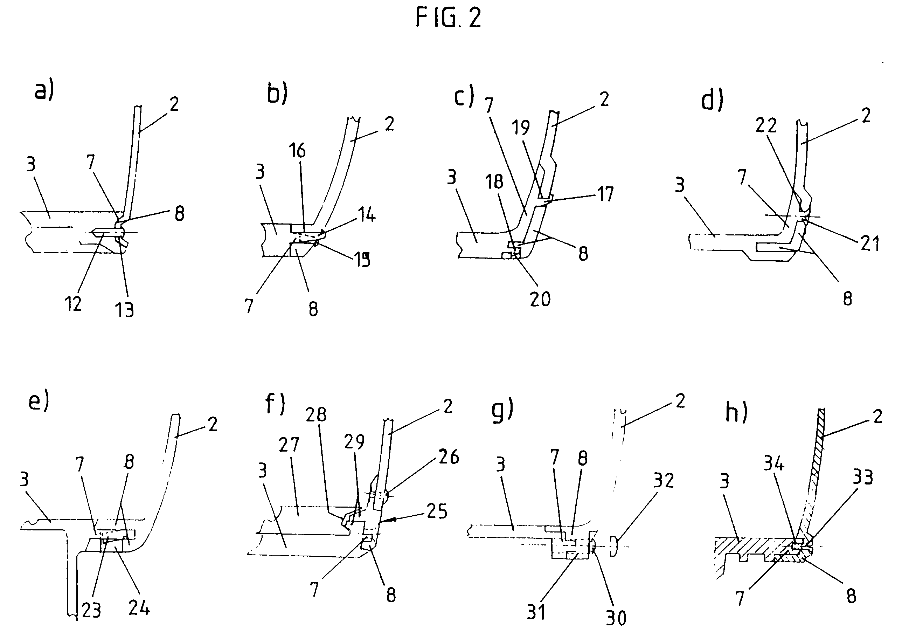

Im weiteren wird auf die Figuren 2a bis h verwiesen, in weichen acht Ausführungsbeispiele erfindungsgemäßer Schuhe anhand je eines Querschnittes, in welchem der Übergangsbereich zwischen Sohle 3 und Schuhoberteil 2 zu sehen ist, dargestellt sind.

Figur 2a zeigt ein seitlich umlaufendes, trapezformiges Profil 7, welches einem gegengleichen, d.h. ebenso trapezförmigen Gegenprofil 8 des Schuhoberteils zugeordnet ist. Als Verbindungselemente sind bei diesem Ausführungsbeispiel eine Mehrzahl selbsthaltender Metallstifte 12 vorgesehen, die durch eine in dem Gegenprofil 8 vorgesehene seitliche Bohrung 13 des Schuhoberteils 2 geführt und horizontal in der Sohle 3 verankert sind, die zu diesem Zweck im Randbereich etwas stärker ausgeführt ist. An dem Schuhoberteil 2 sind die Metallstifte 12 über ihre Köpfe abgestützt, wobei der Schuhoberteil 2 zumindest im Bereich jedes Metallstiftes 12 eine Eintiefung aufweist, in welcher der Kopf dieses Metallstiftes versenkt angeordnet ist.

Figur 2b zeigt eine Ausführungsform, bei welcher die Sohle 3 eine seitlich umlaufende, das Profil 7 bildende Lippe aufweist, die mit einem Gegenprofil 8 verbunden ist, welches an dem unteren Teilabschnitt des Schuhoberteils 2 ausgebildet ist, welcher bündig in die Sohle 3 übergeht An der Lippe 7 der Sohle sind seitlich abstehende, selbstsperrende Haken 14, 15 angeformt, die durch je eine seitliche Öffnung 16 des Schuhoberteils 2 geführt und an der Außenseite dieses Schuhoberteils 2 eingeschnappt sind Bei dem gezeigten Ausführungsbeispiel sind zwei unterschiedliche Typen von Haken vorgesehen, nämlich nach oben gerichtete Haken 14 und nach unten gerichteten Haken 15, die abwechselnd nacheinander angeordnet sind.

In Figur 2c ist ebenso eine Ausführungsform mit nach unten und nach oben gerichteten Haken 17, 18 dargestellt, die jedoch übereinander angeordnet sind Die Haken 17, 18 sind wiederum seitlich abstehend an der Sohle 3 angeordnet, durch entsprechende Öffnungen 19, 20 geführt und an dem Schuhoberteil 2 eingeschnappt. Das Profil 7 und das Gegenprofil 8 sind bei dieser Ausführungsform relativ breit und im wesentlichen L-förmig ausgebildet.

Figur 2d zeigt eine Ausführungsform mit Profilen 7, 8, die jenen der Figur 2c ähnlich sind. An dem nach oben führenden Schenkel des an der Sohle 3 vorgesehenen Profils 7 sind eine Mehrzahl seitlich abstehender Zapfen 21 angeordnet, welche an der Außenseite des Schuhoberteils 2 mit einer zugeordneten Öffnung 22 verschweißt sind.

Das Profil 7 der in Figur 2e dargestellten Ausführungsform ist wiederum als eine seitlich an der Sohle 3 abstehende, im Querschnitt rechteckige Lippe ausgebildet, wogegen das Gegenprofil eine gegengleiche, das heißt, im Querschnitt ebenso rechteckige Rille des Schuhoberteils 2 ist (vgl. Fig. 2b). An der Lippe des Profils 7 sind jedoch bei dieser Ausführungsform nach unten vorstehende Rastnasen 23 vorgesehen, welche in Kerben 24 eingerastet sind, die als von der Rille des Gegenprofils 8 im wesentlichen vertikal nach unten führende Öffnungen ausgebildet sind.

In Figur 2f ist ein Beispiel angeführt, bei welchem der Schuhoberteil 2 an seiner der Sohle 3 zugewandten Berandung einen mit dem Gegenprofil 8 versehenen Befestigungsstreifen 25 aufweist, der z.B. mittels Nieten 26, fest mit dem Schuhoberteil 2 verbunden ist Das Profil 7 und das Gegenprofil 8 weisen bei diesem Ausführungsbeispiel wieder eine Lippe und eine Rille mit gegengleichen rechteckigen Querschnitten auf Das zwischen dem Profil und dem Gegenprofil wirkende Verbindungselement ist bei dem gezeigten Schnitt nicht zu sehen. Hiefür kann jedoch jedes der hier genannten Elemente vorgesehen sein. In Figur 2f ist weiters eine Zwischensohle 27 zu sehen, die an ihrer Berandung eine trapezförmige Nut 28 aufweist, die durch eine mittels der Sohle 3 und des Befestigungsstreifens 25 gebildeten, profilartigen seitlichen Verankerung 29 gehalten ist.

Das Ausführungsbeispiel von Figur 2g zeigt ein gestuftes Profil 7 und Gegenprofil 8, welche über pilzförmig ausgebildete seitliche Bolzen 30 miteinander verbunden sind, die in der Sohle 3 verankert und in je einer Bohrung 31 des Schuhoberteils 2 gelagert sind, wobei die pilzförmig ausgebildeten Kopfe der Bolzen 30 seitlich aus den zugeordneten Bohrungen 31 des Schuhoberteils 2 herausragen und mittels je eines aufschieb- oder aufsteckbaren Sicherungsstückes 32 gehalten sind, welches den entsprechenden Bolzenkopf im wesentlichen gänzlich umschließt.

In Figur 2h ist ein einfaches Ausführungsbeispiel dargestellt, bei welchem als Verbindungselemente für die Profile 7, 8 horizontale Schrauben 33 vorgesehen sind, die mit ihren Köpfen an dem Schuhoberteil 2 abgestützt und mit ihrem Gewinde in entsprechenden Gewindebohrungen 34 der Sohle 3 verankert sind.

In den Figuren 3a bis d sind weitere vier Ausführungsbeispiele eines Schuhes der erfindungsgemäßen Art anhand je eines Querschnittes dargestellt, in welchem jeweils der Übergangsbereich zwischen der Sohle 3 und dem Schuhoberteil 2 zu sehen ist, wobei die Sohle 3 einstuckig mit Anbauteilen für Sportschuhe, z.B. Rollschuhe oder Eislaufschuhe, ausgebildet ist.

Figur 3a zeigt einen Teilausschnitt eines Eislaufschuhes, bei weichem die Sohle 3 einstückig mit einem Trägerstuck 35 für eine Kufe 36 ausgebildet ist, wobei die Kufe 36 mittels zumindest zwei gesicherten Bolzen 37 auswechselbar in dem Tragerstück 35 gehalten ist. Das seitlich an der Berandung der Sohle 3 umlaufende Profil 7 ist hier in Form einer abgerundeten Lippe ausgebildet, die in einer gegengleichen Rille des Gegenprofils 8 gelagert ist. Als Verbindungselemente 9 werden bei diesem Ausführungsbeispiel die gesicherten Bolzen 30 von Figur 2g verwendet.

Figur 3b zeigt einen Teilausschnitt eines Rollschuhes, bei welchem die Sohle 3 einstückig mit einem Rahmen 4 für nicht dargestellte Laufrollen ausgebildet ist. Die Profile 7, 8 sind bei dem in Figur 3b gezeigten Ausführungsbeispiel als eine Lippe und eine Rille mit gegengleichen rechteckigen oder quadratischen Querschnitten ausgebildet Bei dem gezeigten Schnitt sind keine Verbindungselemente zu sehen. Jedoch können auch bei dieser Ausführungsform im wesentlichen alle hier genannten Verbindungselemente verwendet werden.

In Figur 3c ist ein weiteres Ausführungsbeispiel eines Rollschuhes dargestellt, bei welchem die Verbindungselemente in Form je einer selbsthaltenden Steckverbindung ausgebildet sind, die einen seitlich von der Sohle 3 abstehenden, geschlitzten Zapfen 38 aufweist, der durch eine entsprechende seitliche Öffnung 39 des Schuhoberteils 2 nach außen geführt und dort über je eine nach oben und eine nach unten gerichtete Rastnase 40 bzw. 41 an der Berandung dieser Öffnung 39 eingeschnappt ist Diese Ausführungsform der Verbindungselemente 9 ist beispielsweise in dem Rollschuh 1 der Figur 1 verwirklicht.

Figur 3d zeigt eine Ausführungsform eines Rollschuhes, bei welchem der Rahmen 4 für die Laufrollen zwar nicht einstückig mit der Sohle 3 ausgebildet, sondern über die (nicht dargestellten) Verbindungselemente starr mit der Sohle 3 bzw. dem Schuhoberteil 2 verbunden ist Das Profil 7 und das Gegenprofil 8 dieses Rollschuhes sind im wesentlichen halbkreisförmig ausgebildet. Als Verbindungselemente sind bei dem Ausführungsbeispiel der Figur 3d vorzugsweise Schrauben, Bolzen oder Nieten vorgesehen.

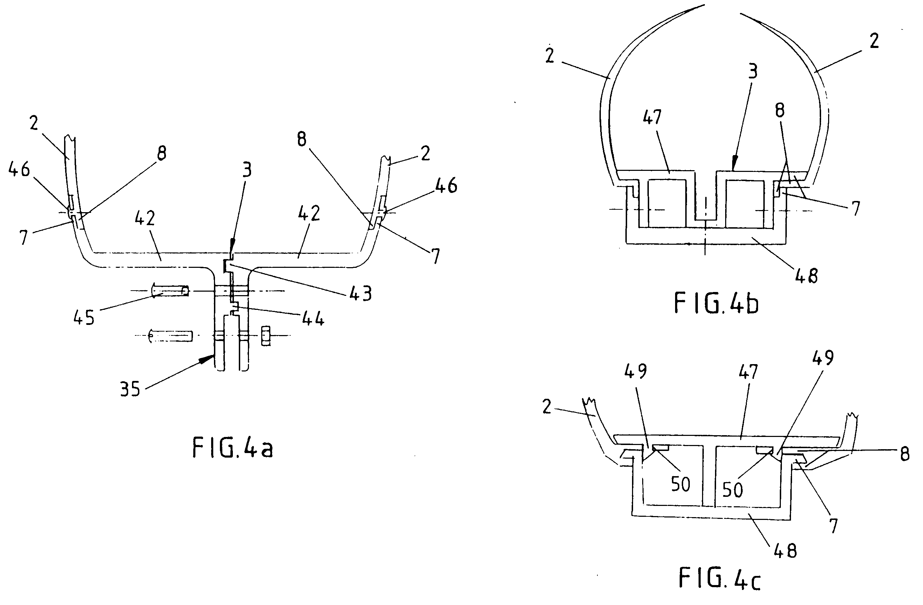

Die Figuren 4a, 4b und 4c zeigen weitere Ausführungsbeispiele von Schuhen, z.B. Rollschuhen, Eislaufschuhen oder Skischuhen, bei welchen die Sohle 3 zweiteilig ausgebildet ist.

In Figur 4a ist ein Eislaufschuh dargestellt, bei welchem die einstückig mit dem Trägerteil für eine nicht gezeigte Kufe ausgebildete Sohle 3 aus zwei seitlich nebeneinander angeordnete Teile 42a, 42b besteht, die im Bereich der Langsmittelebene des Schuhes starr miteinander verbunden sind Die zwei Teile 42a, 42b sind über gegengleiche Langsprofile 43, 44 zusammengefügt und mittels Schraubbolzen oder Nieten 45 fest miteinander verbunden. Das Profil ist im vorliegenden Fall ein einfaches Stufenprofil, welches über seitlich nach außen abstehende, verformbare Verbindungspilze 46 gehalten ist.

Die Figuren 4b und 4c hingegen zeigen einen Schuh, bei welchem die Sohle 3 zweiteilig ausgebildet ist und einen unteren und einen oberen Sohlenteil 47, 48 aufweist, wobei der untere Sohlenteil 48 im wesentlichen U-förmig und der obere Sohlenteil 47 als ein T- und/oder U-förmiges Längsprofil ausgebildet ist, sodaß bei Ineinanderfügen des oberen und unteren Sohlenteils zwischen diesen beiden Sohlenteilen 47, 48 ein Hohlraum gebildet wird, durch welchen das Gewicht der Sohle erheblich reduziert werden kann Solche Ausführungsformen sind insbesondere zur Verwendung als Skischuhe geeignet. Bei dem Ausführungsbeispiel nach Figur 4b wird das L-förmige Profil 7 der Sohle 3 erst durch Zusammenfügen der zwei Sohlenteile 47 und 48 gebildet. Die Verbindungselemente sind bei dieser Ausführungsform nicht zwischen der Sohle 3 und dem Schuhoberteil 2 sondern zwischen den zwei Sohlenteilen 47, 48 wirksam, wobei der Schuhoberteil 2 formschlüssig in dem L-förmigen Profil gehalten ist. Als Verbindungselemente sind vorzugsweise wiederum Schrauben, Bolzen, Nieten oder verschweißbare Zapfen vorgesehen. Bei dem Ausführungsbeispiel von Figur 4c ist das Profil 7 an dem unteren Sohlenteil 48 und das Gegenprofil 8 an dem Schuhoberteil 2 angeordnet, wogegen die Verbindungselemente an dem oberen Sohlenteil 47 angeordnet und in Form von nach unten abstehenden Rasthaken 49 ausgebildet sind, die in vertikalen Öffnungen 50 des Schuhoberteils 2 eingerastet sind. Zusätzlich ist der Außenabstand der Rasthaken 49 an die Innenabmessungen des U-Profils des unteren Sohlenteils 48 angepaßt, sodaß das Profil 7 durch diese Rasthaken 49 nach außen gedrängt und in dem Gegenprofil 8 gehalten wird.

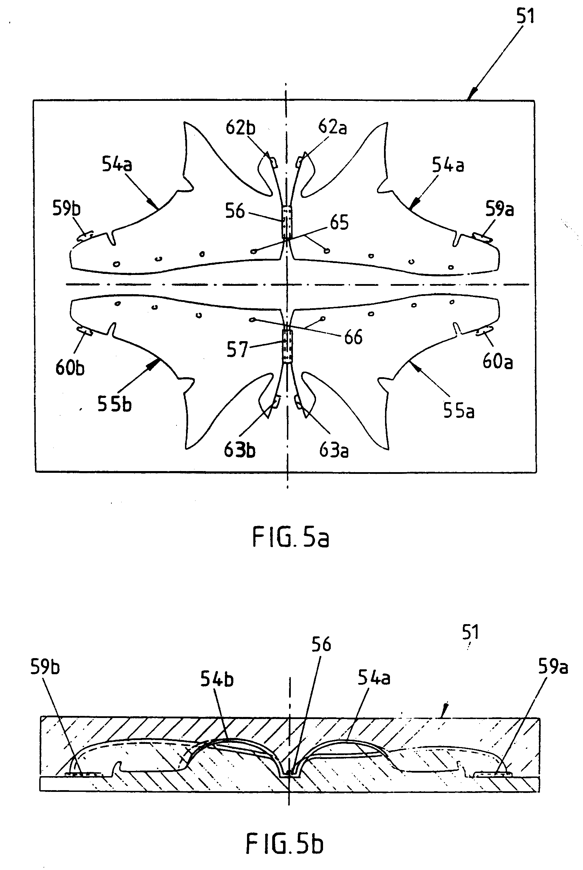

In den Figuren 5a bis 5f ist eine besonders vorteilhafte Ausführungsform eines Schuhes der erfindungsgemäßen Art dargestellt, bei welchem der Schuhoberteil als eine Schale ausgebildet ist, welche eine besonders einfache Herstellung und Zusammenbau des Schuhes ermöglicht Die gezeigte Schale ist zur Verwendung in einem Roll- bzw. Eislaufschuh vorgesehen.

Figuren 5a und 5b zeigen einen Formenblock 51, mittels welchem die in Figur 5c dargestellte Schale 2 hergestellt werden kann, welche aus zwei Teilabschnitten 52a, 52b besteht, welche entlang einer in Längsrichtung verlaufenden Mittelebene des Schuhes miteinander verbindbar sind. Die zwei Teilabschnitte 52a, 52b sind weiters im Fersenbereich über eine Lasche 53 miteinander verbunden, die vorzugsweise einstückig mit den zwei Teilabschnitten des Schuhoberteils ausgebildet ist Ebenso ist der in Figur 1 gezeigte Rollschuh 1 mittels Formenblöcken dieser Art herstellbar, sodaß die folgenden Ausführungen im wesentlichen auch für das Ausführungsbeispiel von Figur 1 gelten.

Der in den Figuren 5a und 5b dargestellte Formenblock 51 weist daher je eine Form 54a, 54b für die Teilabschnitte des linken Schuh und je eine spiegelverkehrt zu den Formen 54a, 54b ausgebildete Form 55a, 55b für den rechten Schuh auf Die Formen 54a, 54b, 55a, 55b sind so in dem Formenblock 51 angeordnet, daß die Fersenabschnitte der zusammengehörigen Teilabschnitte einander unmittelbar benachbart sind. Zwischen den einander zugeordneten Formen 54a und 54b bzw. 55a und 55b ist im Fersenbereich je eine Form 56 bzw. 57 für die Verbindungslasche 53 der beiden Teilabschnitte 52a, 52b des Schuhoberteils 2 vorgesehen. welche die zwei Formen 54a, 54b bzw. 55a, 55b miteinander verbindet.

Die zwei Teilabschnitte 52a, 52b werden im Zehen- oder Ristbereich über je einen an der Berandung angeordneten, von der Schale 2 nach oben abstehenden Fortsatz 58a, 58b miteinander verbunden Zu diesem Zweck sind auch in dem Formenblock 51 entsprechende Formenteile 59a, 59b bzw. 60a, 60b für die Fortsätze des rechten und linken Schuhes vorgesehen. Weiters sind bei dem in Figur 5c gezeigten Ausführungsbeispiel auch im hinteren Schaftbereich an jedem Teilabschnitt 52a, 52b der Schale 2 an ihrer Berandung nach hinten ragende Fortsätze 61a, 61b vorgesehen, für welche in dem Formenblock 51 an der Berandung der Formen 54a, 54b bzw. 55a, 55b entsprechende Formenteile 62a, 62b bzw. 63a, 63 b ausgespart sind.

Bei dem Ausführungsbeispiel der Figur 5c ist an der jeweils der Sohle zugeordneten Berandung der Teilabschnitte 52a, 52b ein Gegenprofil 8 vorgesehen, welches beim Zusammenbau des Schuhes mit einem Profil einer hier nicht dargestellten Sohle verbindbar ist Oberhalb des Profils 8 sind an den Teilabschnitten 52a, 52b vier Öffnungen 64 ausgespart, für welche auch in dem Formenblock 51 (vgl. Fig. 5a) entsprechende gegengleiche Formen 65, 66 vorgesehen sind.

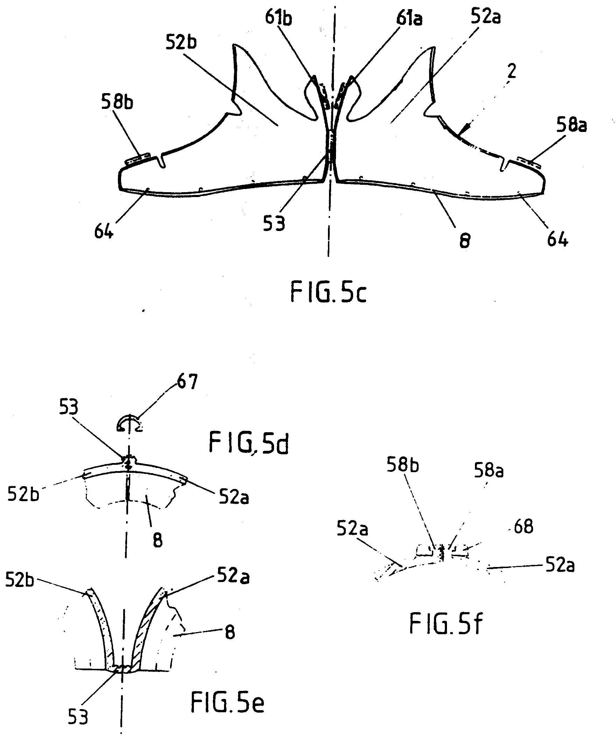

Beim Zusammenbau des Schuhes werden die einander zugeordneten Fortsatze 58a, 58b bzw. 61a, 61b mittels einer Steck- oder Klemmverbindungen, wie sie in den Figuren 5d, 5e und 5f im Querschnitt dargestellt sind fest miteinander verbunden, wobei die in Figur 5c schwarz eingezeichneten Abschnitte der Berandung der Teilabschnitte 52a, 52b fest miteinander verbunden werden.

In den Figuren 5d und 5e ist ein im Fersenbereich durch die Schale 2 des Schuhes von Fig. 5c gelegter Querschnitt zu sehen, wobei Figur 5e den Zustand nach dem Spritzen der Schale 2 und Figur 5d den Zustand während oder nach dem Zusammenbau des Schuhes zeigt. In diesen Figuren ist zu sehen, daß die Lasche 53 an beiden Seiten mehrere vertikal ausgerichtete Schlitze aufweist, welche bei dem Zusammenbau des Schuhes ein elastisches Verschwenken eines Teilabschnittes 52a bezüglich des anderen 52b um 180° ermöglichen Nach einem Verschwenken der Teilabschnitte 52a, 52b wird die Lasche 53 mittels eines Aufsatzes 67 gesichert, welcher bei dem dargestellten Ausführungsbeispiel als eine geschlitzte Steckhülse ausgebildet ist.

In Figur 5f ist ein vergrößerter Querschnitt durch den Zehenbereich des Schuhes von Figur 5c zu sehen. Dieser Figur ist zu entnehmen, daß die nach oben gerichteten Fortsätze 58a, 58b der Teilabschnitte 52a, 52b pilzförmig ausgebildet und im zusammengebauten Zustand des Schuhes mittels eines rahmerförmigen Steckerteils 68 gehalten sind.

Natürlich besteht bei einem weiteren, hier nicht dargestellten Ausführungsbeispiel die Möglichkeit, die Lasche 53 zur Verbindung der zwei Teilabschnitte 52a, 52b im Bereich der Schuhspitze und im Fersenbereich eine Steck- oder Klemmverbindung 67 oder 68 vorzusehen. Die Formen 54a, 54b bzw. 55a, 55b sind bei diesem Ausführungsbeispiel so in dem Formenblock anzuordnen, daß die Schuhspitzen der Teilabschnitte 52a, 52b einander unmittelbar benachbart sind.

Ebenso hier nicht dargestellt ist eine weitere Ausführungsform für einen Formenblock 51, bei welchem die Formen 54a, 54b für die Teilabschnitte 52a, 52b austauschbare Einsätze für optische oder technische Elemente, z.B. für rauhe oder glatte Oberflächen, für Ventilationsklappen, für einen seitlichen Aufprallschutz oder eine Wärmedämmung, aufweisen. Prinzipiell kann somit ein einziger Formenblock durch Austausch solcher Einsatzstücke zur Herstellung von Schuhen verschiedenster Art verwendet werden. Beispielsweise können in einer einzigen Form Schalen für Rollschuhe, die vorwiegend zur Sportausübung im Sommer vorgesehen sind, oder Schalen für Eislaufschuhe, die vorwiegend im Winter zum Einsatz kommen, hergestellt werden. Überdies besteht die Möglichkeit, in den Formen 54a, 54b Ausnehmungen zur Aufnahme von Anbaustücken, z.B. Verschluß- oder Gelenksteile, vorzusehen, die somit während des Spritzvorganges in die Schale integriert werden. Dadurch können beim Zusammenbau eines solchen Schuhes zusätzlich Arbeitsgänge eingespart werden.

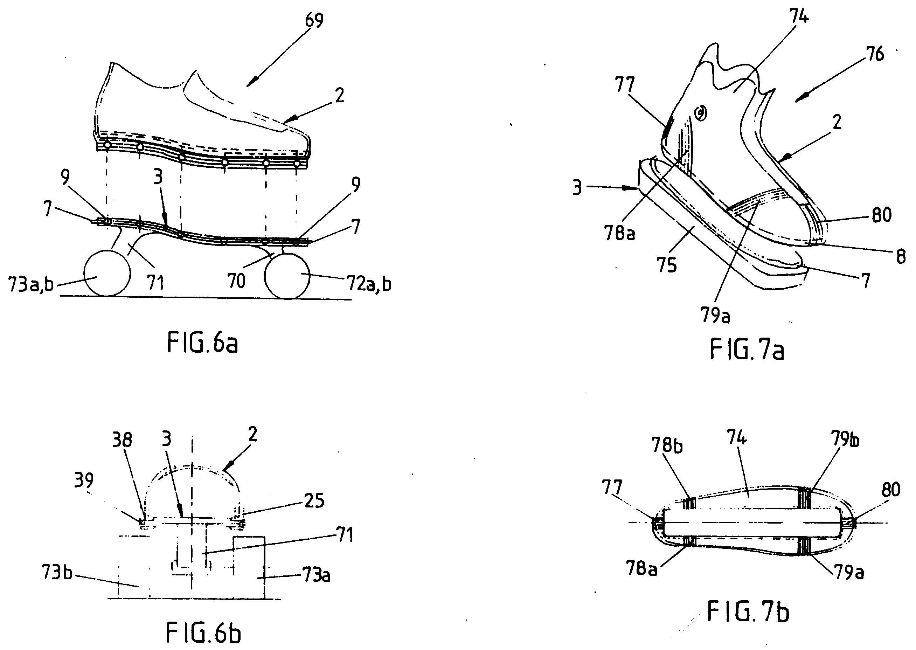

Die Figuren 6a und 6b zeigen einen erfindungsgemäßen Schuh am Beispiel eines vierrädrigen Rollschuhes 69, bei welchem der Schuhoberteil 2 aus einem weichen Material, z.B. einem weichen Kunststoff oder Leder, und die Sohle 3 aus einem biegesteifen Material, z.B. einem harten Kunststoff oder einem Metall, gefertigt sind. Die Sohle 3 ist einstückig mit einem vorderen und einen hinteren Träger 70 bzw. 71 für je zwei nebeneinander angeordneten Laufrollen 72a, 72b bzw. 73a, 73b ausgebildet und weist an ihrer Berandung ein Profil 7 und Verbindungselemente 9 auf (vgl. Fig. 3c). Zur Verbindung des vergleichsweise weichen Schuhoberteils 2 mit der steifen Sohle 3 ist ein die Berandung des Schuhoberteils 2 umlaufender Verbindungsstreifen 25, z.B. ein Keder, vorgesehen, der an dem Schuhoberteil 2 befestigt, vorzugsweise mit diesem verklebt, verschweißt oder vernäht ist. In diesem Verbindungsstreifen 25 sind die Öffnungen 39 für die als Zapfen 38 ausgebildeten Verbindungselemente der Sohle 3 vorgesehen (vgl. wiederum Fig. 3c).

In den Figuren 7a und 7b ist ein Ausführungsbeispiel mit einem als einstückige Schale 74 ausgebildeten Schuhoberteil 2 und einer Sohle 3 dargestellt, die als eine Normsohle 75 für einen Skischuh 76 ausgebildet ist. Um die Montage der einstückigen Schale 74 auf die Sohle 75 zu erleichtern, sind bei diesem Ausführungsbeispiel im Fersen-, Rist- und Zehenbereich begrenzt elastische Teilbereiche 77, 78a, 78b, 79a, 79b und 80 vorgesehen. Diese elastischen Teilbereiche ermöglichen ein Überstülpen des nicht naher dargestellten Gegenprofils des Schuhoberteils 2 auf das Profil der Sohle 3. Die ebenso nicht dargestellten Verbindungselemente dienen bei einer solchen Ausführungsform lediglich dazu, diese Stülpverbindung zu sichern.

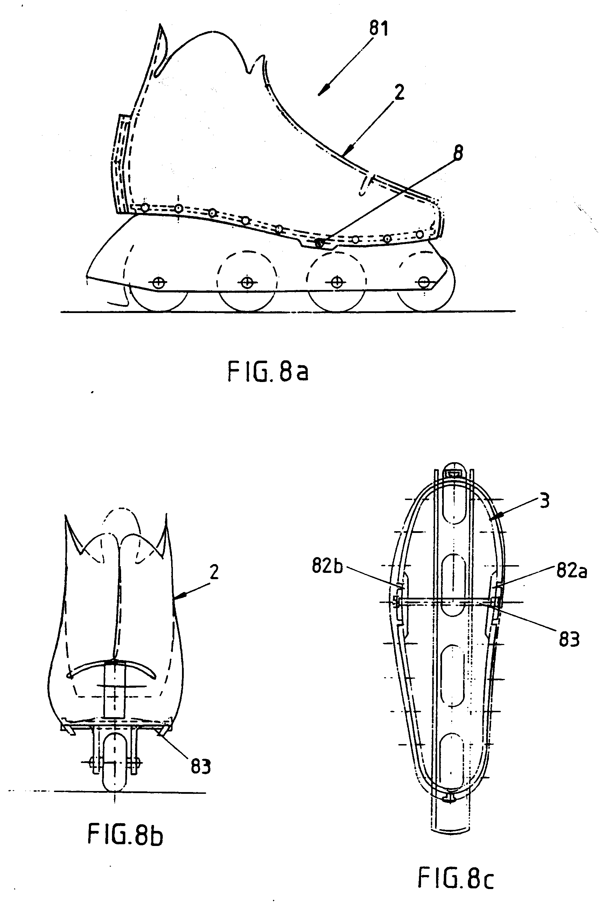

Anhand der Figuren 8a, 8b, 8c ist ein weiteres Ausführungsbeispiel eines erfindungsgemäßen Schuhes am Beispiel eines weiteren Rollschuhes 81 dargestellt. Bei diesem Ausführungsbeispiel sind an der Berandung der Sohle 3 im Ristbereich zwei seitlich gegenüber liegende Ausnehmungen 82a, 82b vorgesehen, die eine Breitenanpassung des Schuhes ermöglichen. Zu diesem Zweck ist in diesem Bereich eine quer durch die Sohle 3 verlaufende Spindel 83 angeordnet, die mit ihren Enden an den Außenflächen des Schuhoberteils 2 angreift.

Abschließend ist noch anzumerken, daß die vorliegende Erfindung nicht auf die gezeigten Ausführungsbeispiele eingeschränkt ist. Beispielsweise können andere als die hier dargestellten Profile zur Verbindung der Schuhoberteile mit der Sohle vorgesehen sein. Im Rahmen der vorliegenden Erfindung besteht bei Ausbildung des Profils bzw. Gegenprofils als eine Rille oder eine Lippe die Möglichkeit, diese Rille bzw. Lippe horizontal, d.h. seitlich nach außen oder nach innen gerichtet, oder vertikal, d. h. nach oben oder nach unten gerichtet anzuordnen. Die Verbindungselemente können entweder im Bereich des Profils bzw. Gegenprofils oder aber auch getrennt davon angeordnet sein. Diese Verbindungselemente können natürlich auch in andere als durch das Profil vorgegebene Richtungen, z.B. 90° versetzt, ausgerichtet sein. Ebenso können die Verbindungselemente an der Sohle und/oder an dem Schuhoberteil vorgesehen sein.

## Patentansprüche

1. Sportschuh mit einer Sohle (3) und einem Schuhoberteil (2), der zwei Teilabschnitte (52a, 52b) aufweist, welche entlang einer in Längsrichtung verlaufenden Mittelebene miteinander verbunden sind, wobei diese Teilabschnitte (52a, 52b) über ein Verbindungsmittel mit der Sohle (3) verbunden sind, welche an ihrer Berandung zumindest abschnittsweise ein Profil (7) aufweist, welches einem Gegenprofil (8) des Schuhoberteils (2) zugeordnet ist, und das Profil (7) und das Gegenprofil (8) mittels einer Mehrzahl von in Abstand voneinander angeordneten Elementen (9) des Verbindungsmittels, wie z.B. Rastnasen, Haken, Nieten, Stiften, Schrauben, verschweißbaren Zapfen od. dgl., formschlüssig miteinander verbunden sind.

2. Sportschuh nach Anspruch 1, **dadurch gekennzeichnet, daß** die zwei Teilabschnitte (52a, 52b) des Schuhoberteils (2) über eine im Schuhspitzen- oder Fersenbereich angeordnete Lasche (53) miteinander verbunden sind, die vorzugsweise einstückig mit den zwei Teilabschnitten (52a, 52b) des Schuhoberteils (2) ausgebildet ist.

3. Sportschuh nach Anspruch 1, **dadurch gekennzeichnet, daß** die zwei Teilabschnitte (52a, 52b) im Zehen-, Rist- oder Fersenbereich an ihrer der Mittelebene zugewandten Berandung je einen von dem Schuhoberteil (2) abstehenden Fortsatz (58a, 58b) aufweisen und die einander zugeordneten Fortsätze (58a, 58b), z.B. mittels einer Steck- oder Klemmverbindung (68, 67), fest miteinander verbunden sind.

4. Sportschuh nach Anspruch 3, **dadurch gekennzeichnet, daß** eine über den Rist- und den vorderen Schaftbereich geführte, die zwei Teilabschnitte (52a, 52b) des Schuhoberteils (2) überlappende Zunge (11) des Schuhes mit ihrem vorderen Endabschnitt an den nach oben abstehenden Fortsätzen (58a, 58b) der Teilabschnitte (52a, 52b) des Schuhoberteils (2) befestigt ist.

5. Sportschuh nach Anspruch 1, **dadurch gekennzeichnet, daß** die zwei Teilabschnitte (52a, 52b) im hinteren Schaftbereich an ihrer der Mittelebene zugewandten Berandung je einen nach hinten abstehenden Fortsatz (61a, 61b) aufweisen, wobei die einander zugeordneten Fortsätze (61a, 61b) im, z.B. mittels einer Steck- oder Klemmverbindung (68, 67), fest miteinander verbunden sind.

6. Sportschuh nach Anspruch 5, **dadurch gekennzeichnet, daß** eine im Fersen- und im hinteren Schaftbereich von der Sohle (3) nach oben führende Heckstütze (10) im Schaftbereich an den nach hinten abstehenden Fortsätzen (61a, 61b) der Teilabschnitte (52a, 52b) des Schuhoberteils (2) befestigt ist.

7. Sportschuh nach einem der Ansprüche 1 bis 6, **dadurch gekennzeichnet, daß** das Profil (7) der Sohle (2) eine entlang ihrer Berandung umlaufende Rille aufweist, in welche eine Lippe des Gegenprofils (8) des Schuhoberteils (2) eingreift.

8. Sportschuh nach einem der Ansprüche 1 bis 7, **dadurch gekennzeichnet, daß** das Profil (7) der Sohle (3) eine entlang ihrer Berandung umlaufende Lippe aufweist, welche mit einer Rille des Gegendprofils (8) des Schuhoberteils (2) zusammenwirkt.

9. Sportschuh nach einem der Ansprüche 1 bis 8, **dadurch gekennzeichnet, daß** die Sohle (3) zweiteilig ausgebildet ist und die zwei seitlich nebeneinander angeordnete Teile (42a, 42b) im Bereich der Längsmittelebene des Sportschuhes starr miteinander verbunden sind.

10. Sportschuh nach einem der Ansprüche 1 bis 8, **dadurch gekennzeichnet, daß** die Sohle (3) zweiteilig ausgebildet ist und einen unteren und einen oberen Sohlenteil (48, 47) aufweist, die über ein U- und/oder T-förmiges Längsprofil so ineinandergefügt sind, daß in der Sohle (3) zumindest ein Hohlraum gebildet wird.

11. Sportschuh nach Anspruch 10, **dadurch gekennzeichnet, daß** der untere und obere Sohlenteil (48, 47) unter Bildung eines gemeinsamen Profils (7) für das Gegenprofil (8) des Schuhoberteils (2) ineinandergefügt sind.

12. Sportschuh nach einem der Ansprüche 1 bis 11, **dadurch gekennzeichnet, daß** die Sohle (3) einstückig mit einem Anbauteil für ein Sportgerät, z.B. einem Rahmen (4) für die Laufrollen (5a, 5b, 5c, 5d) eines Rollschuhes oder einem Träger (35) für eine Kufe (37) eines Eislaufschuhes, ausgebildet ist.

13. Verfahren zur Herstellung eines Sportschuhes nach einem der Ansprüche 1 oder 2, welches die folgenden Schritte aufweist:
― Herstellen der zwei Teilabschnitte (52a, 52b) des Schuhoberteils (2) aus einem Kunststoff durch Spritzen in je einer Form (54a, 54b),
― Herstellen einer Sohle (3), vorzugsweise einstückig, durch Spritzen aus einem Kunststoff, gegebenenfalls unter Einbeziehung eines Anbauteiles für einen Roll- oder Eislaufschuh,
― Zusammenfügen der zwei Teilabschnitte (52a, 52b) des Schuhoberteils (2) und der Sohle (3) in einem einzigen Arbeitsgang zu einem Sportschuh gemäß Anspruch 1.

14. Verfahren nach Anspruch 13, **dadurch gekennzeichnet, daß** die zwei Teilabschnitte (52a, 52b) des Schuhoberteils (2) einstückig miteinander hergestellt werden, wobei die so hergestellten Teilabschnitte (52a, 52b) über eine vorzugsweise im Fersenbereich angeordnete Lasche (53) beweglich miteinander verbunden sind.

15. Verfahren nach einem der Ansprüche 13 oder 14, **dadurch gekennzeichnet, daß** vorgefertigte Anbaustücke für den Sportschuh, die vorzugsweise aus einem anderen Material gefertigt sind, z.B. Verschluß- oder Gelenksteile, bei dem Spritzvorgang in die Schale integriert werden.

## Claims

1. Sports shoe with a sole (3) and a shoe upper (2), which comprises two portions (52a, 52b) which are connected to each other along a longitudinally extending middle plane, wherein these portions (52a, 52b) are connected to the sole (3) by a connecting means, which sole comprises at its edge at least in portions, a profile (7) which is allocated to a complementary profile (8) of the shoe upper (2), and the profile (7) and the complementary profile (8) are connected to each other in a form-fit manner by means of a plurality of mutually spaced elements (9) of the connecting means, such as locking lugs, hooks, rivets, pins, screws, solderable studs or the like.

2. Sports shoe according to claim 1, characterised in that the two portions (52a, 52b) of the shoe upper (2) are connected to each other by means of a tab (53) disposed in the shoe tip or heel region and preferably formed as a single piece with the two portions (52a, 52b) of the shoe upper (2).

3. Sports shoe according to claim 1, characterised in that, in the toe, instep or heel region, the two portions (52a, 52b) comprise, on their edge facing the middle plane, a respective projection (58a, 58b) protruding from the shoe upper (2), and the mutually allocated projections (58a, 58b) are firmly connected to each other, for example, by means of a plug or clamping connection (68, 67).

4. Sports shoe according to claim 3, characterised in that a tongue (11) of the shoe, which passes over the instep and front leg region and overlaps the two portions (52a, 52b) of the shoe upper (2), is attached by its front end portion to the upwardly protruding projections (58a, 58b) of the portions (52a 52b) of the shoe upper (2).

5. Sports shoe according to claim 1, characterised in that, in the rear leg region, the two portions (52a, 52b) each comprise, on their edge facing the middle plane, a rearwardly protruding projection (61a, 61b), wherein the mutually allocated projections (61a, 61b) are firmly connected to each other in the [sic], for example, by means of a plug or clamping connection (68, 67).

6. Sports shoe according to claim 5, characterised in that a rear support (10), which is directed upwards from the sole (3) in the heel and rear leg region, is attached in the leg region to the rearwardly protruding projections (61a, 61b) of the portions (52a, 52b) of the shoe upper (2).

7. Sports shoe according to one of claims 1 to 6, characterised in that the profile (7) of the sole (2) comprises a peripheral channel along its edge, into which channel a lip of the complementary profile (8) of the shoe upper (2) engages.

8. Sports shoe according to one of claims 1 to 7, characterised in that the profile (7) of the sole (3) comprises a peripheral lip along its edge, which lip cooperates with a channel in the complementary profile (8) of the shoe upper (2).

9. Sports shoe according to one of claims 1 to 8, characterised in that the sole (3) is formed in two parts and the two parts (42a, 42b), which are disposed laterally adjacent to each other, are rigidly connected to each other in the region of the longitudinal middle plane of the sports shoe.

10. Sports shoe according to one of claims 1 to 8, characterised in that the sole (3) is formed in two parts and comprises a lower and an upper sole part (48, 47) which are fitted into each other by means of a U- and/or T-shaped longitudinal profile in such a way that at least one hollow space is formed in the sole (3).

11. Sports shoe according to claim 10, characterised in that the lower and upper sole parts (48, 47) are fitted into each other thus forming a common profile (7) for the complementary profile (8) of the shoe upper (2).

12. Sports shoe according to one of claims 1 to 11, characterised in that the sole (3) is formed as one piece with an attachment for sports equipment, for example, a frame (4) for the wheels (5a, 5b, 5c, 5d) of a roller skate or a support (35) for a runner (37) of an ice skate.

13. Method for producing a sports shoe according to one of claims 1 or 2, which comprises the following steps:
- producing the two portions (52a, 52b) of the shoe upper (2) from a synthetic material by injection into a respective mould (54a, 54b),
- producing a sole (3), preferably from a single piece, by injection of a synthetic material, possibly with incorporation of an attachment for a roller skate or ice skate,
- fitting together the two portions (52a, 52b) of the shoe upper (2) and the sole (3) in a single working process to form a sports shoe in accordance with claim 1.

14. Method according to claim 13, characterised in that the two portions (52a, 52b) of the shoe upper (2) are produced as one piece with each other, wherein the portions (52a, 52b) produced in this manner are movably connected to each other by means of a tab (53) preferably disposed in the heel region.

15. Method according to one of claims 13 or 14, characterised in that prefabricated attachments for the sports shoe, which are preferably produced from another material, for example, fastening or joint parts, are integrated into the shell during the injection process.

## Revendications

1. Chaussure de sport comportant une semelle (3) et une empeigne (2), qui comporte deux éléments (52a,52b), qui sont reliés entre eux le long d'un plan médian qui s'étend dans la direction longitudinale, et dans laquelle ces éléments (52a,52b) sont reliés par l'intermédiaire d'un moyen de liaison à la semelle (3), qui possède sur son bord, au moins par intervalles, un profil (7), qui est associé à un profil antagoniste (8) de l'empeigne (2) de la chaussure, et le profil (7) et le profil antagoniste (8) sont reliés entre eux, selon une liaison par formes complémentaires, par une multiplicité d'éléments (9) qui sont distants les uns des autres, du moyen de liaison, comme par exemple des ergots d'encliquetage, des crochets, des rivets, des broches, des vis, des tétons soudables ou analogues.

2. Chaussure de sport selon la revendication 1, caractérisée en ce que les deux éléments (52a,52b) de l'empeigne (2) de la chaussure sont reliés entre eux par l'intermédiaire d'une patte (53), qui est disposée dans la zone de la pointe ou du talon de la chaussure et qui est réalisée de préférence d'un seul tenant avec les deux éléments (52a,52b) de l'empeigne (2) de la chaussure.

3. Chaussure de sport selon la revendication 1, caractérisée en ce que les deux éléments (52a,52b) comportent, dans la zone des doigts de pied, dans la zone du coup de pied ou dans la zone du talon, au niveau de leur bord tourné vers le plan médian, respectivement un prolongement (58a,58b) qui fait saillie à partir de l'empeigne (2) de la chaussure, et que les prolongements (58a,58b), qui sont associés l'un à l'autre, sont reliés entre eux de façon fixe, par exemple à l'aide d'une liaison à enfichage ou à serrage (68,67).

4. Chaussure de sport selon la revendication 3, caractérisée en ce qu'une languette (11) de la chaussure, qui s'étend au-dessus de la partie du talon et dans la partie avant de la tige et chevauche les deux éléments (52a, 52b) de l'empeigne (2) de la chaussure, est fixée par sa partie d'extrémité avant sur les prolongements saillants (58a,58b), qui font saillie vers le haut, des éléments (52a,52b) de l'empeigne (2) de la chaussure.

5. Chaussure de sport selon la revendication 1, caractérisée en ce que les deux éléments (52a,52b) possèdent chacune, dans la partie arrière de la tige, sur leur bord tourné vers le plan médian, un prolongement (61a, 61b) qui fait saillie vers l'arrière, les prolongements (61a, 61b) qui sont associés entre eux, étant reliés de façon fixe entre eux par exemple au moyen d'une liaison à enfichage ou d'une liaison à serrage (68,67).

6. Chaussure de sport selon la revendication 5, caractérisée en ce qu'un support arrière (10) qui s'étend vers le haut à partir de la semelle (3) dans la zone du talon et dans la zone arrière de la tige est fixé dans la zone de la tige au niveau des prolongements (61a,61b), qui font saillie vers l'arrière, des éléments (52a,52b) de l'empeigne (2) de la chaussure.

7. Chaussure de sport selon l'une des revendications 1 à 6, caractérisée en ce que le profil (7) de la semelle (2) comporte une rainure qui s'étend autour de son bord et dans laquelle s'engage une lèvre du profil antagoniste (8) de l'empeigne (2) de la chaussure.

8. Chaussure de sport selon l'une des revendications là 7, caractérisée en ce que le profil (7) de la semelle (3) comporte une lèvre qui s'étend autour de son bord et qui coopère avec une rainure du profil antagoniste (8) de l'empeigne (2) de la chaussure.

9. Chaussure de sport selon l'une des revendications 1 à 8, caractérisée en ce que la semelle (3) est formée de deux parties et que les deux parties (42a, 42b), qui sont disposées côte-à-côte latéralement, sont reliées rigidement entre elles dans la zone du plan médian longitudinal de la chaussure de sport.

10. Chaussure de sport selon l'une des revendications 1 à 8, caractérisée en ce que la semelle (3) est formée de deux parties et comporte une partie inférieure et une partie supérieure (48,47), qui sont insérées l'une dans l'autre au moyen d'un profil longitudinal en forme de U et/ou en forme de T de sorte qu'au moins une cavité est formée dans la semelle (3).

11. Chaussure de sport selon la revendication 10, caractérisée en ce que les parties inférieure et supérieure (48,47) de la semelle sont insérées l'une dans l'autre en formant un profil commun (7) pour le profil antagoniste (8) de l'empeigne (2) de la chaussure.

12. Chaussure de sport selon l'une des revendications 1 à 11, caractérisée en ce que la semelle (3) est formée d'un seul tenant avec une pièce rapportée pour un appareil de sport, par exemple un cadre (4) pour les roulettes (5a,5b,5c,5d) d'un patin à roulettes, ou un support (35) pour une lame (37) d'un patin à glace.

13. Procédé pour fabriquer une chaussure de sport selon l'une des revendications 1 ou 2, qui comprend les étapes suivantes :
- fabrication des deux éléments (52a,52b) de l'empeigne (2) de la chaussure en une matière plastique, par moulage par injection dans des moules respectives (54a, 54b),
- fabrication d'une semelle (3), de préférence d'un seul tenant, par moulage par injection d'une matière plastique, de préférence moyennant l'insertion d'une pièce rapportée pour un patin à roulettes ou un patin à glace,
- assemblage des deux éléments (52a,52b) de l'empeigne (2) de la chaussure et de la semelle (3) en une seule étape opératoire pour former une chaussure de sport conformément à la revendication 1.

14. Procédé selon la revendication 13, caractérisé en ce qu'on fabrique d'un seul tenant les deux éléments (52a,52b) de l'empeigne (2) de la chaussure, les éléments ainsi fabriqués (52a,52b) étant reliés entre eux, de manière à être mobiles, par l'intermédiaire d'une patte (53) disposée de préférence au niveau du talon.

15. Procédé selon l'une des revendications 13 ou 14, caractérisé en ce que lors du processus de moulage par injection on intègre, dans la coque, des pièces rapportées préfabriquées pour la chaussure de sport, qui sont réalisées de préférence en un autre matériau, par exemple des éléments de fermeture ou d'articulation.
